# NEUE EUROPÄISCHE PATENTSCHRIFT

(11) **EP 0 845 944 B2**
(45) Veröffentlichungstag und Bekanntmachung des Hinweises auf die Entscheidung über den Einspruch: **13.08.2003**
(45) Hinweis auf die Patenterteilung: 15.11.2000
(21) Anmeldenummer: 96927686.4
(22) Anmeldetag: 05.08.1996
(51) Int. Cl.: A01N 53/00

(54) **WIRKSTOFFKOMBINATIONEN AUS PYRETHROIDEN UND INSEKTEN-ENTWICKLUNGSHEMMERN**
ACTIVE SUBSTANCE COMBINATIONS COMPRISING PYRETHROIDS AND INSECT-DEVELOPMENT INHIBITORS
COMBINAISONS DE PRINCIPES ACTIFS A BASE DE PYRETHROIDES AVEC DES INHIBITEURS DE DEVELOPPEMENT D'INSECTES

(30) Priorität: 16.08.1995 DE 19530075; 16.02.1996 DE 19605773
(43) Veröffentlichungstag der Anmeldung: 10.06.1998
(73) Patentinhaber: S.C.Johnson & Son, Inc., Racine, WI 53403-2236 (US)
(72) Erfinder: MRUSEK, Klaus, D-51467 Bergisch Gladbach (DE); SCHÜTTE, Manfred-Heinrich, D-41540 Dormagen (DE)
(74) Vertreter: Ruschke, Hans Edvard, Dipl.-Ing.
(86) Internationale Anmeldenummer: EP9603455
(87) Internationale Veröffentlichungsnummer: WO97006687

(56) Entgegenhaltungen:
- AU-B- 568 003
- DE-A- 3 317 399
- GB-A- 2 122 494
- CHEMICAL PATENTS INDEX, DOCUMENTATION ABSTRACTS JOURNAL Section Ch, Week 9538 Derwent Publications Ltd., London, GB; Class C03, AN 95-290227 XP002021231 & JP,A,07 187 922 (SUMITOMO CHEM CO LTD) , 25.Juli 1995
- PESTICIDE SCIENCE, Bd. 14, Nr. 3, Juni 1983, BARKING GB, Seiten 246-252, XP002021224 M.A. EL-GUINDY ET AL.: "The joint action of insecticides, or of insect growth regulators and insecticides, on susceptible and diflubenzuron-resistant strains of Spodoptera littoralis Boisd."
- CHEMICAL ABSTRACTS, vol. 102, no. 9, 4.März 1985 Columbus, Ohio, US; abstract no. 74117q, J.L. ROBERTSON ET AL.: "Western spruce budworm: joint action of pyrethroids and insect growth regulators by contact or ingestion." XP002021226 & J. GA. ENTOMOL. SOC., Bd. 19, Nr. 4, 1984, Seiten 454-462,
- CHEMICAL ABSTRACTS, vol. 106, no. 15, 13.April 1987 Columbus, Ohio, US; abstract no. 115190m, K.A. KULKARNI ET AL.: "Effect of synthetic pyrethroid insecticides and chitin synthesis inhibitor on cotton bollworms and fiber properties." XP002021227 & MYSORE J. AGRIC. SCI., Bd. 20, Nr. 1, 1986, Seiten 28-37,
- JOURNAL OF ECONOMIC ENTOMOLOGY, Bd. 84, Nr. 6, 1991, COLLEGE PARK, MARYLAND US, Seiten 1957-1968, XP002021225 G.A. HUGHES ET AL.: "Multinomial logit analysis of the effects of chemical mixtures."
- Der praktische Schädlingsbekämpfer (Heft 5/1994)
- Pest Control Technology, Heft 10/1985, Seiten 10 und 31
- Pest Control Technology, Juni 1990, Seite 58
- Der praktische Schädlingsbekämpfer, Heft 5/1995, Seite 29

## Beschreibung

Die vorliegende Erfindung betrifft neue Wirkstoffkombinationen von Pyrethroiden mit Insekten-Entwicklungshemmern, zur Erzielung einer Langzeitwirkung gegen tierische Schädlinge, insbesondere Insekten und Spinnentiere, mit hoher Effektivität, weniger umweltbelastenden Eigenschaften sowie einem toxikologisch günstigen Bekämpfungskonzept.

Kombinationen von unterschiedlichen insektiziden Mitteln werden zur Bekämpfung von Insekten in Innenräumen seit langer Zeit angewandt. Dabei werden gewöhnlich insektizide Verbindungsklassen miteinander kombiniert, die keine Kreuzresistenzen aufweisen. Auf diese Weise erhält man Formulierungen, die auch gegen resistente Spezies eine gute Wirkung aufweisen (W. Behrenz, K. Naumann, Pflanzenschutz-Nachrichten Bayer, 35, 309 (1982)).

Das Journal of Economic Entomology 84, No. 6, 1957-1968 (1991) betrifft insektizide Mischungen aus Permethrin oder Fenvalerat und Triflumeron, Diflubenzuron oder Methoprene. Pesticide Science 14, No. 3, 246-252 (1983) betrifft insektizide Mischungen enthaltend Cypermethrin und andere Wirkstoffe, z. B. Methoprene. JP-A 7-187922 (1995) betrifft insektizide Mischungen aus Flufenoxuron und Pyrethroiden, von denen 22 Verbindungen namentlich aufgeführt sind.

Um einen Austreib-Effekt und sofortige Wirkung ("Knockdown-Wirkung") sowie Langzeitwirkung gegen Insekten ("Residualwirkung") zu erhalten, wurden bisher Phosphorsäureester, Carbamate und langzeitstabile Pyrethroide miteinander kombiniert (C. Fest, K.-J. Schmidt, The Chemistry of Organophosphorus Pesticides, Springer-Verlag, Berlin (1982); W. Behrenz, E.Böcker, Pflanzenschutznachrichten Bayer, 18, 53 (1965); I. Hammann, R. Fuchs, ibid. 34, 123 (1981) und dort zitierte Literatur).

In letzter Zeit sind nun verschiedene Entwicklungshemmer von Insekten bekannt geworden. Dabei handelt es sich um sogenannte Juvenilhormone sowie um Chitinsynthese-Hemmer aus der Klasse der Benzoylhamstoffe, die den Entwicklungszyklus von Insekten spezifisch beeinflussen, indem sie die Umwandlung der einzelnen Larvenstadien in die nächsthöheren Entwicklungsstadien verhindern.

Dieses Wirkprinzip ist speziell den Insekten eigen und kommt im Warmblüter nicht vor. Daraus resultiert neben einer äußerst effektiven Unterbindung der Entwicklung neuer Insektengenerationen auch das völlige Fehlen von Nebenwirkungen auf den Warmblüter, wodurch ein toxikologisch günstiges Bekämpfungskonzept erreicht wird. Allerdings haben derartige Entwicklungshemmer keine Wirkung auf adulte Stadien von Insekten, so daß die Wirkung erst nach einer Wartezeit von bis zu zwei Wochen eintritt. Für eine gezielte Bekämpfung von Schädlingen, insbesondere Insekten und Spinnentieren, müssen daher Insektizide gefunden werden, die zusammen mit Entwicklungshemmern einerseits einen Austreib-Effekt (flushing-effect) und eine sofortige Wirkung ("Knockdown-Wirkung") zeigen, andererseits aber auch mit einer Langzeitwirkung (Residualwirkung) über mehrere Entwicklungsstadien der Schädlinge hinweg aufwarten, weshalb sich beide Wirkstoffe in optimaler Weise ergänzen müssen.

Überraschend wurde nun gefunden, daß durch die Kombination von synthetischen Pyrethroiden oder natürlichem Pyrethrum, die sich als Einzelwirkstoff durch gute Knockdown-Eigenschaften und einen guten Austreib-Effekt auszeichnen, aber nur bis zu wenigen Tagen wirken, mit Insekten-Entwicklungshemmern eine Langzeitwirkung mit ausgezeichneter Effektivität, weniger umweltbelastenden Eigenschaften sowie toxikologisch günstigerem Bekämpfungskonzept erreichen läßt.

Gegenstand der Erfindung sind insektizide und akarizide Wirkstoffkombinationen, welche neben den üblichen Zuschlagsstoffen mindestens einen Wirkstoff aus der Reihe Transfluthrin, Allethrin und mindestens einen Insekten-Entwicklungshemmer aus der Reihe Fenoxycarb, Pyriproxylen, Triflumuron, Flufenoxuron, Methoprene oder mindestens den Wirkstoff Pyrethrum und mindestens einen Insekten-Entwicklungshemmer aus der Reihe Fenoxycarb, Flufenoxuron enthalten.

Ganz besonders bevorzugt sind Wirkstoffkombinationen bestehend aus Transfluthrin (I) und Triflumeron (II) und/oder Flufenoxuron (III). Die Kombination der Wirkstoffe vereint in ausgezeichneter Weise hervorragende Knockdown- und Austreibwirkung mit einer Residualwirkung über mehrere Wochen ohne Wirkungslücke 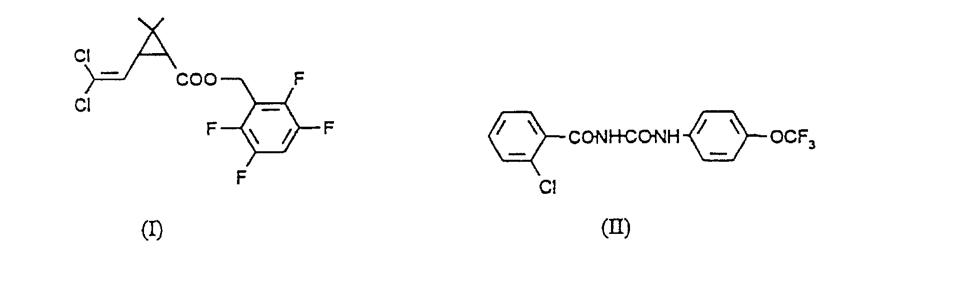 Weiterhin zeigt insbesondere die Wirkstoffkombination bestehend aus Transfluthrin (I) und Flufenoxuron (III) überraschenderweise einen synergistischen Effekt.

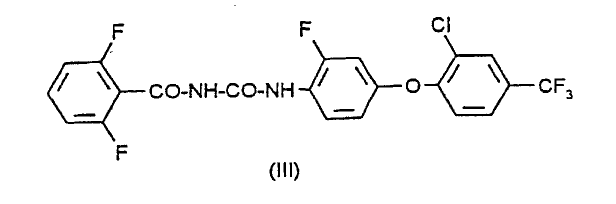

Dieser Effekt ist dadurch gekennzeichnet, daß die dem Transfluthrin eigene charakteristische Wirkung durch Zusatz von Flufenoxuron verstärkt wird. Der Zusatz von Flufenoxuron zu Transfluthrin verstärkt sowohl die Aerosolwirkung gegen fliegende Insekten als auch die Wirkung nach Direktbesprühung von Schaben und den Austreibeffekt. Besonders deutlich ist die Verstärkung der Wirkung auf Schaben, die auf frisch besprühten Oberflächen zu beobachten ist.

Die erfindungsgemäßen Wirkstoffkombinationen eignen sich zur Bekämpfung von tierischen Schädlingen, insbesondere Insekten und Spinnentieren, die in der Landwirtschaft, in Forsten, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten tierischen Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.

Aus der Ordnung der Anoplura z.B. Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Spodoptera litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp. Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ctentocephalides felis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die erfindungsgemäßen Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

### Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die erfindungsgemäßen Wirkstoffkombinationen können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden oder wachstums-regulierenden Stoffen vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die Anwendung geschieht in einer den Anwendungsformen angepaßten üblichen Weise.

Die erfindungsgemäßen Wirkstoffkombinationen können prinzipiell gegen alle fliegenden und kriechenden Insekten und Spinnentiere in allen Entwicklungsstadien eingesetzt werden. Besonders bevorzugt werden sie bei der Bekämpfung von Flöhen und Schaben, also Insekten der Ordnung Blattariae, insbesondere der Familie Blattellidae, vorzugsweise der Art Blattella germanica oder der Familie Blattidae, vorzugsweise der Arten Blatts orientalis und Periplaneta americana, aber auch gegen andere Schabenarten, ganz besonders bevorzugt jedoch gegen Blattella germanica, eingesetzt werden.

So ist beispielsweise Transfluthrin neben seiner hervorragenden Wirkungseigenschaft gegen fliegende Insekten, in Aerosol-, Verdampfer- und Räuchersystemen eingesetzt, auch ein sehr gutes Mittel, um versteckt sitzendes Ungeziefer wie z.B. Schaben aller Entwicklungsstadien aus ihren Verstecken zu treiben (flushing-effect). Diese kommen dann mit den frisch geschaffenen Wirkstoffbelägen in Berührung und werden dabei abgetötet (K. Naumann, W. Behrenz, EP 279 325 (1988)).

Werden Insekten, z.B. Schaben oder Flöhe direkt mit Transfluthrin angesprüht, so fallen diese schnell in Rückenlage (knock down) und können sich nicht wieder erholen (Mortalität). Um solche Wirkungen zu erreichen, kann der Wirkstoff in den verschiedensten Formulierungen wie z.B. als Sprühdose, Ölsprühmittel, wasserbasierendes Pumpspray, ULV-, Heiß-und Kaltnebel eingesetzt werden. Desweiteren eignen sich Formulierungen auf Basis von z.B. Emulsionskonzentraten (EC), Emulsionskonzentraten auf Wasserbasis (EW) oder wettable powders (WP)

Über die aufgezeigte Wirkung hinaus, kann Transfluthrin auch als Präparat zur Bekämpfung von kriechenden Insekten, vorzugsweise Schaben aber auch Flöhen, mit Dauerwirkung eingesetzt werden, wenn diese Wirkung nur kurz, im Sinne von einigen Tagen, sein soll. Das Präparat wirkt auch als Residualwirkstoff angewandt gegen alle Entwicklungsstadien der Schaben. Hierfür sind für den nicht professionellen Anwender besonders gut z.B. Sprühdosen, Ölsprühmittel und Pumpsprays geeignet.

Der Chitinsynthesehemmer Triflumuron gehört chemisch zur Gruppe der Benzoylharnstoffe, deren Wirkung sich grundlegend von der herkömmlicher Insektizide wie Phosphorsäureester, Carbamate oder Pyrethroide unterscheidet (K. Mrusek in Proc. 1^{st} Int. Conf. Insect Pests in the Urban Environment, Hrsg. K.B. Wildey und W.H. Robinson, **1993,** 385).

Triflumuron ist kein akut wirkendes Insektizid, sondern ein Entwicklungshemmer, der spezifisch in den Häutungsvorgang der verschiedenen Larvenstadien eingreift. Da Insekten kein inneres Skelett besitzen, verleiht ihnen eine durch Chitin verfestigte Außenhaut, die Kutikula, die nötige Stützung und den äußeren Schutz. Triflumuron verhindert, daß sich die jüngeren Larven in das nächst höhere Larvenstadium während ihrer Entwicklung umwandeln. Adulte Insekten werden hingegen nicht beeinträchtigt, weil diese sich nicht mehr häuten. Triflumuron ist bei den Larven vieler Insekten wirksam zu denen auch Schaben und Flöhe gehören.

Chitin kommt nur bei ganz bestimmten Gruppen von Organismen vor: neben Arthropoden auch bei Nematoden, Pilzen und einigen Algen. Bei Wirbeltieren ist es dagegen nicht vorhanden, was die außerordentlich günstige geringe Toxizität von Triflumuron bei Wirbeltieren erklärt.

Bei einer kombinierten Anwendung in der Praxis wird mit Transfluthrin bei Schaben der Austreibeffekt, die insektizide Sofortwirkung bei Direktbesprühung der Tiere und eine kurze Dauerwirkung erreicht. Das Triflumuron bewirkt die lange Dauerwirkung gegen die verschiedenen Larvenstadien.

Der Wirkstoffgehalt deraus den handelsüblichen Formulierungen bereiteten Anwendungsformen kann in weiten Bereichen variieren.

Die erfindungsgemäßen Wirkstoffkombinationen enthalten vorzugsweise 0,001 bis 95, besonders bevorzugt 0,01 bis 70 Gew.-% Wirkstoffmischung beider Komponenten. Bevorzugt ist z.B. in Sprühdosen ein Verhältnis: 0,01 - 0,2 Gew.-% Transfluthrin : 0,005 - 10,0 Gew.-% Triflumuron oder Flufenoxuron. Insbesonders bevorzugt sind Wirkstoffkombinationen mit einem Verhältnis 0,01 - 0,2 Gew.-% Transfluthrin : 0,005 - 1,5 Gew.-% Triflumuron oder Flufenoxuron.

Darüber hinaus können die erfindungsgemäßen Wirkstoffkombinationen aber auch in Mücken-bzw. Räucherspiralen, Verdampferplättchen oder Langzeitverdampfer sowie in Mottenpapieren, Mottenkissen oder anderen hitzeunabhängigen Verdampfersystemen angewandt werden.

Bei dem Wirkungskonzept kann Transfluthrin beispielsweise aber auch durch Pyrethrum und/oder Allethrin, das Triflumuron durch andere Chitinsynthese-hemmer wie z.B. Flufenoxuron, Methoprene oder Juvenoide wie z.B. Fenoxycarb, Pyriproxyfen ersetzt werden.

Neben Sprühdosen, Ölsprühmitteln und wasserbasierenden Pumpsprays ist dieses Konzept zur Bekämpfung von Schädlingen auch in anderen Formulierungen anwendbar wie z.B. ULV-, Heiß- und Kaltnebel sowie Emulsionskonzentrate (EC), Emulsionskonzentrate auf Wasserbasis (EW), wettable powders (WP) oder Mikroverkapselungen (CS).

Bevorzugt werden Aerosole bzw. Ölsprühmittel eingesetzt. Aerosol-Rezepturen setzen sich vorzugsweise zusammen aus den genannten Wirkstoffkombinationen, Lösungsmitteln wie niedere Alkohole (z. B. Methanol, Ethanol, Propanol, Butanol), Ketone (z. B. Aceton, Methylethylketon), Paraffinkohlenwasserstoffe (z. B. Kerosene) mit Siedebereichen von etwa 50 bis 250° C, Dimethylformanid, N-Methyl-pyrrolidon, Dimethylsulfoxid, aromatische Kohlenwasserstoffe wie Toluol, Xylol, Wasser, femer Hilfsstoffe wie Emulgatoren wie Sorbitanmonooleat, Oleylethoxylat mit 3 - 7 Mol Ethylenoxid, Fettalkoholethoxylat, Parfümöle wie etherische Öle, Ester aus mittleren Fettsäuren mit niederen Alkoholen, aromatische Carbonylverbindungen, gegebenenfalls Stabilisatoren wie Natriumbenzoat, amphotere Tenside, niedere Epoxide, Triethylorthoformiat und im Bedarfsfalle den Treibgasen wie Propan, Butan, Stickstoff, Preßluft, Dimethylether, Kohlendioxid, Distickstoffoxid, bzw. Gemischen aus diesen Gasen.

Die Aerosol-Mischung als Ganzes befindet sich bei Sprühdosen in einer geeigneten, ausreichend druckfesten Verpackung. Das Material dieser Verpackung kann Metall (Eisen verzinnt oder Aluminium) mit oder ohne separatem Innenschutzlack sein, ferner sind Glas mit oder ohne Kunststoffummantelung und bestimmte Kunststoffe geeignet (z. B. Polyamid, Polypropylen, PET).

Zur Aerosolverpackung gehört ein geeignetes, selbsttätig schließendes Ventil mit für den Anwendungsfall optimierten technisch-physikalischen Parametern wie Düsenöffunungen, Düsenart, Dichtungsmaterialien usw.. Zur Sicherung gegen unbeabsichtigtes Betätigen des Ventils ist vorzugsweise die Aerosolverpackung mit einer geeigneten Schutzkappe zu versehen.

Die Ölspray-Formulierungen unterscheiden sich von den Aerosolrezepturen grundsätzlich dadurch, daß keine Treibgase verwendet werden, da zur Zerstäubung in der Regel mechanische Pumpen vorgesehen sind. Die zur Anwendung kommenden Lösungsmittel und sonstige Hilfsmittel unterscheiden sich praktisch nicht von den bei Aerosolrezepturen gebräuchlichen Mitteln. Das Packmaterial für diese Formulierungen ist weit weniger kritisch, da grundsätzlich nur Dichtigkeit und Beständigkeit gegen das Füllgut verlangt werden. So sind beispielsweise Metalle wie Eisen, vorwiegend verzinnt und/oder lackiert, Aluminium usw. geeignet. Ferner eignen sich Glas und bestimmte Kunststoffe wie Polyvinylchlorid, Polyethylen, Polypropylen, PET.

Die Auswahl der jeweiligen Lösungsmittel und sonstigen Zusatzstoffe sowie der Art der Sprühdosen und der Verpackung richtet sich nach den vorhandenen Materialien, nach den speziellen Einsatzbereichen sowie den Anforderungen an die Lagerfähigkeit der Produkte und kann durch den Fachmann unter Anwendung seines Fachwissens und gegebenenfalls mit Hilfe von einfachen allgemein bekannten Untersuchungsmethoden leicht getroffen werden.

Die Herstellung der erfindungsgemäßen Wirkstoffkombinationen soll anhand derfolgenden Beispiele erläutert werden.

| **Formulierungsbeispiele:** | |
|---|---|
| **1. Sprayformulierung** | **Gewichtsteile** |
| Transfluthrin | 0,05 |
| Triflumuron | 0,5 |
| Aceton | 40,0 |
| Desodoriertes Kerosen/Gemisch gesättigter, | 19,32 |
| aliphatischer Kohlenwasserstoffe (z. B. | |
| Isododecan) | |
| Parfümöl | 0,03 |
| Stabilisator (Butylenoxid, Triethylorthoformiat) | 0,1 |
| Treibmittel: Propan/Butan (25 : 75) | 40,00 |

| **2. Sprayformulierung** | **Gewichtsteile** |
|---|---|
| Pyrethrine | 0,20 |
| Triflumuron | 0,5 |
| Aceton | 40,0 |
| Desodoriertes Kerosen | 19,197 |
| Parfümöl | 0,003 |
| Stabilisator (wie Beispiel 1) | 0,1 |
| Treibmittel: Propan/Butan (25 : 75) | 40,00 |

| **3. Sprayformulierung** | **Gewichtsteile** |
|---|---|
| Transfluthrin | 0,03 |
| Flufenoxuron | 0,05 |
| Isopropanol | 5,00 |
| Desodoriertes Kerosen | 5,00 |
| Emulgator Span 80 | 1,00 |
| Wasser, entmin. | 58,92 |
| Treibmittel: Propan/Butan (25 : 75) | 30,0 |

| **4. Ölsprühmittelformulierung** | **Gewichtsteile** |
|---|---|
| Transfluthrin | 0,03 |
| Triflumuron | 0,5 |
| N-Methylpyrrolidon | 20,0 |
| Desodoriertes Kerosen | 79,20 |

| **5. Ölsprühmittelformulierung** | **Gewichtsteile** |
|---|---|
| Pyrethrine | 0,2 |
| Triflumuron | 0,5 |
| N-Methylpyrrolidon | 20,0 |
| Desodoriertes Kerosen | 79,30 |

### Prüfung von Sprühdosen auf flushing effect bei Schaben

Die Prüfung erfolgte in Kunststoffschalen (Pikierkästen, Typ 23, W.u.H. Fernholz GmbH & Co. KG, Meinerzhagen) mit den Maßen 40 cm x 60 cm x 6 cm. Das auf dem Boden ausgelegte Filterpapier wurde mit "tesa"® film 4104 fixiert. Talkumierte Seitenwände verhinderten das Entkommen der Schaben. In der Mitte der Schalen wurde das Versteck, im vorderen Drittel ein umgestülptes wassergefülltes Wägegläschen als Tränke sowie ein Stück Zwieback als Nahrung aufgestellt.

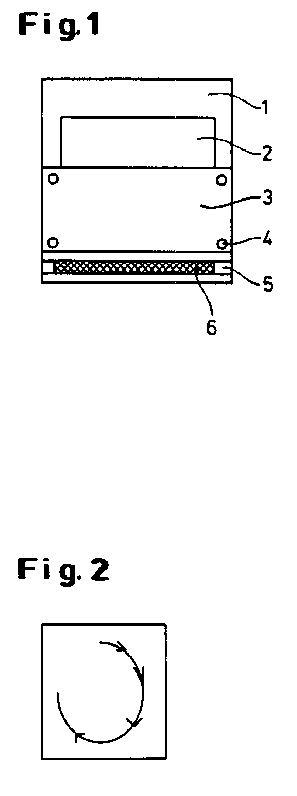

Boden und Deckenplatte des Versteckes bestehen aus mit weißem DD-Lack beschichtetem Aluminium, Seitenstege und Schieber aus Teflon. Senkkopfschrauben und Flügelmuttern halten die Konstruktion zusammen, wobei mittels des Schiebers die gewünschte Verstecktiefe eingestellt wird. Aufbau und Abmessungen des Versteckes sind Fig. 1: [1 = Bodenplatte 15 x 30 x 0,5 cm, 2 = Schieber 13 x 16 x 0,5 cm, 3 = Deckplatte 15 x 15 x 0,5 cm, 4 = Senkkopfschraube mit Flügelmutter, 5 = Seitensteg 1 x 16 x 0,5 cm, 6 = Öffnung] zu entnehmen. Durch Austausch des Schiebers und der Seitenstege kann die Versteckhöhe variiert werden.

In jeden Behälter wurden 24 Stunden vor Versuchsbeginn 10 Schaben einer bestimmten Art sowie Stadiums oder Geschlechtes eingesetzt. Nach dieser Zeit befanden sich in der Regel alle Tiere im Versteck. Dieses wurde in den Abzug gebracht und in einem Kunststoffbehälter mit den Maßen 65 cm x 46,5 cm x 30 cm auf zwei Glaszylinder (Höhe insgesamt 36 cm, Durchmesser 12 cm) gestellt. Aus einer Entfernung von 30 cm und 36 cm Höhe wurden 2 g Doseninhalt in Richtung der Verstecköffnung gesprüht.

Nach Beendigung des Sprühvorganges erfolgte die Übertragung des Versteckes in die Kunststoffschale auf einen talkumierten Glasring (Höhe 5 cm, Durchmesser 10 cm). Die Zahl der ausgetriebenen Schaben wurde bis zu 5 min. nach Behandlung in einminütigem, bis zu 30 min. in fünfminütigem Abstand, sowie nach 60 min. und 24 Stunden ermittelt. Nach 60 min. wurde eine geknickte Filterscheibe mit Durchmesser 9,5 cm als Schutz für die ausgetriebenen Schaben in die Pikierkästen gegeben. In jedem Versuch wurde eine Kontrollbehandlung mit einer wirkstoffreien Dose durchgeführt. Nur in Einzelfällen suchten herausgetriebene Schaben das Versteck nochmals auf; in der Regel fielen sie bald vom Versteck herunter. Nach Versuchsabschluß wurden die Verstecke auseinandergeschraubt, mit Aceton vorgespült, bei 95°C in der Spülmaschine gereinigt und bei 150°C im Trockenschrank getrocknet.

**Tabelle 1**

| **Austreibeffekt von verschiedenen Sprühdosen gegen Schaben der Art Blattella germanica L 5** | | | | | | | | | | | | | |
|---|---|---|---|---|---|---|---|---|---|---|---|---|---|
| Versteckhöhe: 0,5 cm | | | | Mittel aus 2 Versuchen | | | | | Temperatur: 21°C | | | | |
| Verstecktiefe: 5,0 cm | | | | | | | | | rel. Feuchte: 55 % | | | | |
| Sprühmenge: 2,0 - 2,2 g Doseninhalt | | | | | | | | | | | | | |

| % Wirkstoff | | % Austreibeffekt nach Minuten (') und Stunden (h) | | | | | | | | | | | |
|---|---|---|---|---|---|---|---|---|---|---|---|---|---|
| Transfluthrin | Triflumuron | 1' | 2' | 3' | 4' | 5' | 10' | 15' | 20' | 25' | 30' | 60' | 24h |
| 0,05 | - | 45 | 60 | 70 | 85 | 85 | 100 | 100 | 100 | 100 | 100 | 100 | 100 |
| - | 0,5 | 0 | 0 | 0 | 0 | 0 | 0 | 0 | 0 | 0 | 0 | 0 | 20 |
| 0,05 | 0,5 | 20 | 30 | 55 | 65 | 70 | 95 | 95 | 95 | 95 | 95 | 95 | 95 |
| - | - | 0 | 0 | 0 | 0 | 0 | 0 | 0 | 0 | 0 | 0 | 0 | 20 |

### Prüfung von Sprühdosen auf Wirkung nach Direktbesprühung von kriechenden Insekten.

Die Versuche werden in einer Abzugskammer durchgeführt, in der die Absaugung so zu regulieren ist, daß eine Beeinträchtigung des Sprühstrahls nicht erfolgt. Jeweils eine Schabe wird in eine Drahtgazebox mit einem Innendurchmesser von 70 mm, einer Höhe von 10 mm und einer Maschenweite von 1,5 mm gesetzt. Die so vorbereiteten Versuchsgefäße werden an der Sprühapparatur in einem Winkel von 45° eingespannt. Die Fläche hinter und unter dem Gazeprüfbehälter wird mit saugfähigem Filterpapier ausgelegt, das nach jeder Prüfung ausgetauscht wird.

In einer Entfernung von 60 cm in der Mitte der Drahtgaze bis zur Düse des Sprühkopfes der zu prüfenden Aerosole gerechnet, wird an der Sprühapparatur die Sprühdose so eingespannt, daß der Sprühstrahl senkrecht auf die Drahtgaze trifft. Von der zu prüfenden Dose wird vorher die Zeit ermittelt, die gesprüht werden muß, um 2,4 - 2,8 g Doseninhalt auszubringen. Vor und nach jedem Versuch wird die Dose gewogen, um die ausgebrachte Menge exakt zu bestimmen. Gleichzeitig mit dem Sprühventil wird eine Stoppuhr betätigt, um die Knockdown-Wirkung auf die Tiere genau bestimmen zu können. Die Tiere werden gleich nach dem Besprühen in ein sauberes Gefäß überführt, mit einem Tupfer versehen und auf knock down nach Zeit sowie % Mortalität nach bestimmten Zeiten ausgewertet.

**Tabelle 2**

| **Wirkung von verschiedenen Sprühdosen nach Direktbesprühung von Schaben der Art Blattella germanica mm** | | | | | | |
|---|---|---|---|---|---|---|
| Sprühmenge: 2,4 - 2,8 g Doseninhalt/Schabe aus einer Entfernung von 60 cm | | | | | Temperatur: 22°C | |
| | | | | | rel. Feuchte: 47 % | |

| (Mittel aus 10 Versuchen) | | | | | | |
|---|---|---|---|---|---|---|
| % Wirkstoff | | 100 % knock down nach Sekunde ("): | | % Mortalität nach: | | |
| Transfluthrin | Triflumuron | Mittel | Streubreite | 2h | 24h | 48h |
| 0,05 | - | 33" | 19"-58" | 100 | 100 | 90 |
| - | 0,5 | - | - | 0 | 10 | 10 |
| 0,05 | 0,5 | 27" | 14"-55" | 100 | 100 | 100 |

### Testmethode zur Prüfung von Sprühdosen auf ihre Residualwirkung gegen kriechende Insekten.

### 1. Besprühen der Unterlagen

Die Behandlung wird in einer Abzugskammer durchgeführt, in der sich die Absaugung so regulieren läßt, daß eine Beeinträchtigung des Sprühstrahls der Dosen nicht erfolgt. Die Kammer wird auf dem Boden und an den Wänden bis zu einer Höhe von 65 cm mit Filterpapier ausgekleidet.

Behandelt werden können die wichtigsten Materialien, insbesondere lasierte und unlasierte Kacheln, PVC-Platten, lackiertes Sperrholz usw. Die zu behandelnden Unterlagen (Größe 15 x 15 cm = 225 cm²) werden auf einem Stativring (Durchmesser außen 10 cm), der in einer Höhe von 5 cm an einem Stativ befestigt ist, so aufgestellt und an der Stativstange angelehnt, daß ein Winkel von 55° gebildet wird. Da jede Sprühdose von unterschiedlicher Zusammensetzung und technischer Ausrüstung in ihrem Sprühverhalten (Druck, Spritzkegel, Tröpfchengröße) abweichen kann, muß der Versuchsansteller, bevor die eigentlichen Unterlagen behandelt werden, mit jeder Sprühdose an Pappunterlagen (15 x 15 cm) trainieren, aus welcher Entfernung und in welcher Geschwindigkeit gesprüht werden muß.

Ein gleichmäßiges Besprühen der Unterlagen mit der gewünschten Aufwandmenge wird erreicht, wenn je nach Spritzkegel und Druck der Sprühdose aus einer Entfernung von 25 - 40 cm gesprüht wird. Dabei hat es sich als zweckmäßig erwiesen, die Dose von Hand in einem Halbkreis zu führen. Der Sprühstrahl wird dabei auf der Unterlage oben links beginnend über Mitte rechts nach unten links geführt (Fig. 2).

Die Menge, die über die Ränder der Unterlagen hinaus gesprüht wird, der Spritzverlust, wurde in eingehenden Versuchen mit Pappumrandungen bestimmt und betrug ca. 10 %.

Vor und nach jedem Sprühvorgang wird die Sprühdose gewogen, um die ausgebrachte Menge Doseninhalt zu bestimmen.

Um eine Doseninhaltsmenge von 50 g/m² auszubringen, müssen 1,24 g Doseninhalt/225 cm² ausgebracht werden. Diese Menge enthält bereits die ermittelten 10 % Spritzverlust.

Unterlagen, auf die nicht die innerhalb der Toleranz von 1,20 bis 1,30 g liegende Menge Doseninhalt ausgebracht werden, müssen verworfen werden. Sofort nach dem Besprühen wird die Unterlage aus ihrer Schrägstellung genommen und flach gelegt, um ein Ablaufen des Sprühbelages, insbesondere bei nichtsaugenden Unterlagen und extrem feuchten Sprühdosen, zu vermeiden. Nach Abtrocknen der Spritzbeläge werden die Unterlagen in den Testraum überführt.

### 2. Tiermaterial und Testung

Die behandelten Unterlagen werden mit je 5 Schaben besetzt, die in talkumierten Glasringen (Durchmesser 9,5 cm, Höhe 5,5 cm) gehalten werden.

### Auswertung:

Einen Tag nach der Behandlung, dann nach 2 bis zu 4 Tagen täglich werden die behandelten Unterlagen jeweils mit den Testtieren besetzt.
Die Auswertung erfolgt auf 100 % knock down bzw. Mortalität nach 15, 30 und 60 Minuten sowie nach 2, 3 und 4 Stunden.

**Tabelle 3**

| **Residualwirkung von verschiedenden Sprühdosen ausgebracht auf lasierten Kacheln (LK) und unlasierten Kacheln (UK) gegen Schaben der Art Blattella germanica mm.** | | | | | | | | | |
|---|---|---|---|---|---|---|---|---|---|
| | | | | | | Temperatur : 24-25°C | | | |
| | | | | | | rel. Feuchte: 69-76% | | | |

| Alter der Unterlagen | Testzeit | 0,05 % Transfluthrin | | 0,5 % Triflumuron | | 0,05 % Transfluthrin 0,5 % Triflumuron | | Kontrolle | |
|---|---|---|---|---|---|---|---|---|---|
| | | LK | UK | LK | UK | LK | UK | LK | UK |
| 1.Tag | 15' | 80 | 0 | 0 | 0 | 20 | 40 | 0 | 0 |
| | 30' | 100 | 80 | 0 | 0 | 100 | 100 | 0 | 0 |
| | 60' | 100 | 100 | 0 | 0 | 100 | 100 | 0 | 0 |
| | 2 h | 100 | 100 | 0 | 0 | 100 | 100 | 0 | 0 |
| | 3 h | 100 | 100 | 0 | 0 | 100 | 100 | 0 | 0 |
| | 4 h | 100 | 100 | 0 | 0 | 100 | 100 | 0 | 0 |
| 2 Tage | 15' | 100 | 20 | 0 | 0 | 100 | 20 | 0 | 0 |
| | 30' | 100 | 60 | 0 | 0 | 100 | 80 | 0 | 0 |
| | 60' | 100 | 60 | 0 | 0 | 100 | 100 | 0 | 0 |
| | 2 h | 100 | 100 | 0 | 0 | 100 | 100 | 0 | 0 |
| | 3 h | 100 | 100 | 0 | 0 | 100 | 100 | 0 | 0 |
| | 4 h | 100 | 100 | 0 | 0 | 100 | 100 | 0 | 0 |
| 3 Tage | 15' | 0 | 0 | 0 | 0 | 60 | 20 | 0 | 0 |
| | 30' | 100 | 0 | 0 | 0 | 80 | 60 | 0 | 0 |
| | 60' | 100 | 40 | 0 | 0 | 100 | 100 | 0 | 0 |
| | 2 h | 100 | 20 | 0 | 0 | 100 | 80 | 0 | 0 |
| | 3 h | 100 | 40 | 0 | 0 | 100 | 100 | 0 | 0 |
| | 4 h | 100 | 40 | 0 | 0 | 100 | 100 | 0 | 0 |
| 4 Tage | 15' | 20 | 0 | 0 | 0 | 20 | 20 | 0 | 0 |
| | 30' | 20 | 0 | 0 | 0 | 20 | 20 | 0 | 0 |
| | 60' | 20 | 0 | 0 | 0 | 40 | 20 | 0 | 0 |
| | 2 h | 40 | 0 | 0 | 0 | 20 | 20 | 0 | 0 |
| | 3 h | 40 | 0 | 0 | 0 | 20 | 20 | 0 | 0 |
| | 4 h | 60 | 0 | 0 | 0 | 20 | 20 | 0 | 0 |

### Zwangskontaktzeittest

Auf den zu prüfenden Unterlagen werden jeweils 5 Larven der Schabenart Blattella germanica eines definierten Stadiums innerhalb von talkumierten Glasringen (Durchmesser 9,5cm; Höhe 5,5 cm) ausgesetzt. Durch Entfernen der Tiere nach bestimmten Zeiten, lassen sich unterschiedliche Kontaktzeiten erreichen z.B. 2 x 60 min/Woche (Dienstag und Freitag). Die Larven werden von den Oberflächen genommen, jeweils in glasklare Kunststoffbecher überführt, in denen sich Wasser, Nahrung und ein Versteck befindet (Tablettenröhrchen Durchmesser 1,5 cm, Länge 5,5 cm mit nassem Zellstoff gefüllt, Lupolen-Stopfen mit 425 mg gemahlenem Hundekuchen, 3 fach gefaltetes Filterpapier Durchmesser 7 cm als Versteck) und darin weiter gezüchtet. Die Schaben werden in wöchentlichen Abständen auf Mortalität ausgewertet. Die Temperaturen betragen 22-23 °C, die rel. Luftfeuchte 55-65 % bei 12 stündigem Neonlicht Tag / Nachtrythmus.

Die Prüfungen erfolgten auf einen Tag alten sowie 8, 15, 22, 29, 43, 57, 85 und 113 Tage lang gealterten Oberflächen.

**Tabelle 4**

| **Residualwirkung von Transfluthrin und Triflumuron alleine und in Kombination in Sprühdosen auf lasierten Kacheln gegen das 2. Larvenstadium von Blattella germanica** | | | | | |
|---|---|---|---|---|---|
| (Mittel aus 2 Versuchen) | | | | Temperatur: 22-23°C | |
| | | | | rel. Feuchte: 55-65 % | |
| Sprühmenge: 50 g Doseninhalt/m² | | | | | |
| Kontaktzeit: 2 x 1 Stunde/Woche | | | | | |

| Alter der Unterlagen | Testzeit | 0,05 % Transfluthrin | 0,5 % Triflumuron | 0,05 % Transfluthrin 0,5 % Triflumuron | Kontrolle |
|---|---|---|---|---|---|
| 1.Tag | 15' | 100 | 0 | 100 | 0 |
| | 30' | | 0 | | 0 |
| | 60' | | 0 | | 0 |
| | 4 d | | 20 | | 20 |
| | 7 d | | 30 | | 20 |
| | 11d | | 70 | | 20 |
| | 14d | | 80 | | 20 |
| | 18 d | | 90 | | 20 |
| | 21 d | | 90 | | 20 |
| | 25 d | | 100 | | 20 |
| 8 Tage | 4d | 0 | 50 | 60 | 0 |
| | 7d | 10 | 80 | 80 | 0 |
| | 11d | 30 | 80 | 80 | 0 |
| | 14d | 30 | 90 | 90 | 0 |
| | 18d | 30 | 100 | 90 | 20 |
| | 21d | 30 | | 100 | 20 |
| | 25d | 30 | | | 20 |
| | 32d | 30 | | | 20 |
| | 35d | 40 | | | 20 |
| 15 Tage | 4d | 0 | 20 | 10 | 0 |
| | 7d | 10 | 40 | 30 | 0 |
| | 11d | 10 | 80 | 90 | 0 |
| | 14d | 10 | 80 | 100 | 0 |
| | 18d | 10 | 90 | | 0 |
| | 21d | 10 | 100 | | 0 |
| 22 Tage | 4d | 0 | 60 | 40 | 0 |
| | 7d | 0 | 60 | 80 | 0 |
| | 11d | 0 | 100 | 90 | 0 |
| | 14d | 0 | | 100 | 0 |
| 29 Tage | 4d | | 10 | 0 | 0 |
| | 7d | | 20 | 30 | 0 |
| | 11d | | 70 | 60 | 0 |
| | 14d | | 70 | 90 | 0 |
| | 18d | | 80 | 90 | 0 |
| | 21d | | 100 | 100 | 0 |
| 43 Tage | 4d | | 0 | 0 | 0 |
| | 7d | | 10 | 50 | 0 |
| | 11d | | 80 | 80 | 0 |
| | 14d | | 80 | 80 | 0 |
| | 18d | | 90 | 100 | 0 |
| | 21d | | 100 | | 0 |
| 57 Tage | 4d | | 0 | 10 | 0 |
| | 7d | | 40 | 60 | 0 |
| | 11d | | 80 | 80 | 0 |
| | 14d | | 100 | 90 | 0 |
| | 18d | | | 90 | 0 |
| | 21d | | | 90 | 20 |
| | 25d | | | 90 | 20 |
| | 31d | | | 90 | 20 |
| | 38d | | | 100 | 20 |
| 85 Tage | 4d | | 10 | 0 | 0 |
| | 7d | | 50 | 60 | 0 |
| | 11d | | 60 | 70 | 0 |
| | 14d | | 100 | 90 | 0 |
| | 18d | | | 100 | |
| 113 Tage | 4d | | 0 | 0 | 0 |
| | 7d | | 10 | 0 | 0 |
| | 11d | | 30 | 30 | 0 |
| | 14d | | 90 | 100 | 0 |
| | 18d | | 100 | | |

**Tabelle 5**

| **Residualwirkung von Transfluthrin und Triflumuron alleine und in Kombination in Sprühdosen auf lasierten Kacheln gegen das 3. -4. Larven- stadium von Blattella germanica** | | | | | |
|---|---|---|---|---|---|
| (Mittel aus 2 Versuchen) | | | | Temperatur: 22-23°C | |
| | | | | rel. Feuchte: 55-65 % | |
| Sprühmenge: 50 g Doseninhalt/m² | | | | | |
| Kontaktzeit: 2 x 1 Stunde/Woche | | | | | |

| Alter der Unterlagen | Testzeit | 0,05 % Transfluthrin | 0,5 % Triflumuron | 0,05 % Transfluthrin 0,5 % Triflumuron | Kontrolle |
|---|---|---|---|---|---|
| 1.Tag | 15' | 100 | 0 | 100 | 0 |
| | 30' | 100 | 0 | 100 | 0 |
| | 60' | 100 | 0 | 100 | 0 |
| | 4 d | 80 | 0 | 30 | 0 |
| | 7 d | 80 | 10 | 30 | 0 |
| | 11d | 80 | 60 | 30 | 0 |
| | 14d | 80 | 90 | 100 | 0 |
| | 18 d | 80 | 100 | | 0 |
| 8 Tage | 4d | 20 | 10 | 10 | 0 |
| | 7d | 20 | 60 | 50 | 0 |
| | 11d | 20 | 90 | 50 | 0 |
| | 14d 18d | 20 20 | 100 | 80 100 | 0 0 |
| 15 Tage | 4d | 0 | 10 | 10 | 0 |
| | 7d | 0 | 10 | 20 | 0 |
| | 11d | 0 | 20 | 60 | 0 |
| | 14d | 0 | 70 | 70 | 0 |
| | 25d | 0 | 70 | 80 | 0 |
| | 35d | 0 | 80 | 90 | 0 |
| | 39d | 0 | 90 | 100 | 20 |
| | 53d | 0 | 100 | | 20 |
| 22 Tage | 4d | 0 | 20 | 30 | 0 |
| | 7d | 0 | 40 | 50 | 0 |
| | 11d | 0 | 60 | 60 | 0 |
| | 14d | 0 | 60 | 70 | 0 |
| | 18d | 0 | 90 | 70 | 0 |
| | 21d | 0 | 100 | 70 | 0 |
| | 28d | 10 | | 70 | 0 |
| | 35d | 10 | | 80 | 0 |
| | 39d | 10 | | 90 | 0 |
| | 66d | 10 | | 100 | 20 |
| 29 Tage | 4d | | 10 | 0 | 0 |
| | 7d | | 60 | 30 | 0 |
| | 11d | | 80 | 60 | 0 |
| | 14d | | 80 | 90 | 0 |
| | 18d | | 90 | 90 | 0 |
| | 21d | | 90 | 100 | 0 |
| | 25d | | 100 | | 0 |
| 43 Tage | 4d | | 10 | 10 | 0 |
| | 7d | | 20 | 20 | 0 |
| | 11d | | 40 | 40 | 0 |
| | 14d | | 60 | 50 | 0 |
| | 18d | | 80 | 60 | 0 |
| | 21d | | 100 | 60 | 0 |
| | 32d | | | 70 | 0 |
| | 35d | | | 80 | 0 |
| | 45d | | | 90 | 0 |
| | 52d | | | 100 | 0 |
| 57 Tage | 4d | | 0 | 0 | 0 |
| | 7d | | 0 | 20 | 0 |
| | 11d | | 0 | 20 | 0 |
| | 14d | | 70 | 50 | 0 |
| | 18d | | 90 | 70 | 0 |
| | 21d | | 90 | 80 | 0 |
| | 25d | | 90 | 90 | 0 |
| | 60d | | 100 | 90 | 0 |
| | 64d | | | 100 | |
| 85 Tage | 4d | | 0 | 30 | 0 |
| | 7d | | 50 | 70 | 0 |
| | 11d | | 60 | 70 | 0 |
| | 14d | | 70 | 70 | 0 |
| | 18d | | 80 | 90 | 0 |
| | 21d | | 90 | 100 | 0 |
| | 28d | | 100 | | 0 |
| 113 Tage | 4d | | 30 | 10 | 0 |
| | 7d | | 50 | 10 | 0 |
| | 11d | | 60 | 10 | 0 |
| | 14d | | 70 | 30 | 0 |
| | 18d | | 70 | 80 | 0 |
| | 25d | | 90 | 80 | 0 |
| | 28d | | 90 | 90 | 0 |
| | 45d | | 90 | 100 | 0 |
| | 49d | | 100 | | 0 |

**Tabelle 6**

| **Synergistische Verstärkung des Flushing Effekts bei verschiedenen Formulierungen gegen Schaben der Art Blattella germanica L 5** | | | | | | | | | | | | | |
|---|---|---|---|---|---|---|---|---|---|---|---|---|---|
| Versteckhöhe: 0,5 cm | | | | | | Mittel aus drei Versuchen | | | | | | | |
| Verstecktiefe: 5,0 cm | | | | | | Temperatur 21°C | | | | | | | |
| Relative Feuchte: 48 % | | | | | | | | | | | | | |
| Sprühmenge: 1,9-2,0 g Doseninhalt | | | | | | | | | | | | | |

| % Wirkstoff | | % Flushing Effekt nach Minuten und Stunden | | | | | | | | | | | |
|---|---|---|---|---|---|---|---|---|---|---|---|---|---|
| Transfluthrin | Flufenoxuron | 1' | 2' | 3' | 4' | 5' | 10' | 15' | 20' | 25' | 30' | 60' | 24h |
| - | 0,01 | 7 | 17 | 17 | 17 | 17 | 17 | 17 | 17 | 17 | 17 | 27 | 87 |
| 0,05 | - | 13 | 13 | 20 | 27 | 37 | 63 | 73 | 73 | 77 | 77 | 77 | 97 |
| 0,05 | 0,01 | 23 | 37 | 47 | 53 | 67 | 80 | 80 | 87 | 87 | 87 | 87 | 93 |
| 0,05 | 0,0025 | 37 | 50 | 60 | 63 | 83 | 90 | 90 | 93 | 97 | 97 | 97 | 100 |
| - | - | 0 | 0 | 0 | 0 | 0 | 0 | 0 | 0 | 0 | 0 | 0 | 83 |

Bei beiden Verstecktiefen ergaben die Versuche, daß Flufenoxuron als Monosprühdose nur eine geringfügige Irritation bei den Schaben hervorrief. Die Kombination von Transfluthrin + Flufenoxuron in den wasserbasierenden Sprühdosen brachte dagegen einen deutlich besseren Austreibeffekt als die Transfluthrin Mono-Sprühdose.

**Tabelle 7**

| **Synergistische Verstärkung der Wirksamkeit von verschiedenen Sprühdosen nach Direktbesprühung von Schaben der Art Blattella germanica L 5.** | | | | | | |
|---|---|---|---|---|---|---|
| Sprühmenge: 2,4 - 2,8 g Doseninhalt/Schabe aus einer Entfernung von 60 cm | | | | | | |
| Temperatur: 20°C | | | | | | |
| Relative Feuchte: 50 % | | (Mittel aus 10 Versuchen) | | | | |

| % Wirkstoff | | 100 % knock down nach Minuten (^{'}) und Sekunden (") | | % Mortalität nach | | |
|---|---|---|---|---|---|---|
| Transfluthrin | Flufenoxuron | mean | range | 2h | 24h | 48h |
| - | 0,01 | > 2h | - | 0 | 0 | 0 |
| - | 0,005 | > 2h | - | 0 | 0 | 0 |
| - | 0,0025 | > 2h | - | 0 | 0 | 0 |
| 0,05 | - | 166" | 61"-335" | 100 | 50 | 30 |
| 0,05 | 0,01 | 52" | 21"-89" | 100 | 100 | 100 |
| 0,05 | 0,005 | 60" | 16"-150" | 100 | 100 | 90 |
| 0,05 | 0,0025 | 78" | 16"-140" | 100 | 100 | 80 |

Flufenoxuron alleine zeigte in allen 3 Konzentrationen keine Wirkung auf die Schaben. Transfluthrin in Kombination mit Flufenoxuron zeigte bei allen 3 Kombinationen eine deutliche Verbesserung der Wirkung im Vergleich zu Transfluthrin alleine. Mit steigendem Flufenoxuron-Gehalt verbesserte sich die Wirkung, sodaß die Kombination gegenüber der Mono-Sprühdose um den Faktor 2-2,5 fach besser wirkten.

**Tabelle 8**

| **Synergistische Verstärkung der Wirksamkeit verschiedener Aerosolsprühdosen in 20 m**^{**3**}**-Kammern gegen Mücken der Art Culex quinquefasciatus, resistent.** | | | | | | |
|---|---|---|---|---|---|---|
| (Mittel von 3-5 Versuchen) | | | | | | |
| Raumtemperatur: 23,6-24,2°C | | | | Sprühmenge/20 cbm: 8,7-9,1 g | | |
| Relative Feuchte: 44,9-64,3 % | | | | Sprühzeit: 4,3-9,1 s | | |

| % Wirkstoff | | % Knock-down nach Minuten und Sekunden | | | 1h-Kd | 24 h-Mort |
|---|---|---|---|---|---|---|
| Transfluthrin | Flufenoxuron | KT 10 | KT 50 | KT 95 | [%] | [%] |
| - | 0,010 | - | - | - | 0 | 0 |
| 0,050 | - | 9,53 | 12,30 | 23,39 | 99 | 93 |
| 0,050 | 0,010 | 8,49 | 11,27 | 19,59 | 100 | 97 |
| 0,050 | 0,005 | 8,36 | 11,57 | 19,07 | 100 | 96 |
| 0,050 | 0,0025 | 7,41 | 10,33 | 19,29 | 99 | 96 |

**Tabelle 9**

| **Synergistische Verstärkung der Wirksamkeit verschiedener Aerosolsprühdosen in 20 m**^{**3**}**-Kammern gegen Fliegen der Art Musca domestica Stamm WHO(N) mm F 447, sensibel** | | | | | | |
|---|---|---|---|---|---|---|
| (Mittel von 3-5 Versuchen) | | | | | | |
| Temperatur: 23,6-24,2°C | | | | relative Feuchte: 44,9-64,3 % | | |
| Sprühmenge/20 m³: 8,7-9,1 g | | | | Sprühzeit: 4,3-9,1 s | | |

| % Wirkstoff | | % knock down nach Minuten und Sekunden | | | 1h-KD | 24 h-Mort |
|---|---|---|---|---|---|---|
| Transfluthrin | Flufenoxuron | KT 10 | KT 50 | KT 95 | [%] | [%] |
| - | 0,010 | - | - | - | 0 | 0 |
| 0,050 | - | 11,58 | 21,00 | 36,00 | 98 | 76 |
| 0,050 | 0,010 | 10,14 | 15,08 | 25,23 | 100 | 79 |
| 0,050 | 0,005 | 9,41 | 15,31 | 24,56 | 100 | 87 |
| 0,050 | 0,0025 | 10,17 | 16,19 | 23,50 | 100 | 90 |

**Tabelle 10**

| **Synergistische Verstärkung der Wirksamkeit verschiedener Aerosolsprühdosen in 20 m**^{**3**}**-Kammern gegen Fliegen der Art Musca domestica Stamm Weymanns mm F 386, resistent.** | | | | | | |
|---|---|---|---|---|---|---|
| (Mittel von 3-5 Versuchen) | | | | | | |
| Temperatur: 23,5-24,2°C | | | | Relative Feuchte: 40,5-65,3 % | | |
| Sprühmentge/20 cm³ 11,7-12,0 g | | | | Sprühzeit: 6,2-12,1 s | | |

| % Wirkstoff: | | % known down nach Minuten und Sekunden | | | 1h-KD | 24 h-Mort |
|---|---|---|---|---|---|---|
| Transfluthrin | Flufenoxuron | KT-10 | KT-50 | KT-95 | [%] | [%] |
| - | 0,010 | - | - | - | 0 | 0 |
| 0,050 | - | 47,23 | - | - | 43 | 15 |
| 0,050 | 0,010 | 36,57 | 50,44 | - | 69 | 43 |
| 0,050 | 0,005 | 30,58 | 46,11 | - | 77 | 31 |
| 0,050 | 0,0025 | 37,15 | 54,13 | - | 63 | 35 |

Diese Dose mit 0,01 % Flufenoxuron zeigte wie zu erwarten bei allen geprüften Tierarten keine Wirkung.

Gegen die resistenten Mücken wirkten die Kombinationsdosen deutlich schneller als die Transfluthrin-Mono-Dose (Tabelle 8).

Bei den sensiblen und resistenten Fliegen wirkten die Kombinations-Dosen schneller als die Transfluthrin-Mono-Dose. Besonders deutlich machte sich dieser Unterschied in der Mortalität bei resistenten Fliegen bemerkbar (Tabellen 9-10).

Prüfung von Sprühdosen auf Wirkung von frischen noch feuchten Spritzbelägen gegen Schaben.

### 1. Besprühen der Unterlagen

Die Behandlung wird in einer Abzugskapelle durchgeführt, in der sich die Absaugung so regulieren läßt, daß eine Beeinträchtigung des Sprühstrahls der Dosen nicht erfolgt. Die Kapelle wird auf dem Boden mit Filterpapier ausgekleidet.

Behandelt werden können die wichtigsten Materialien, insbesondere lasierte und unlasierte Kacheln, PVC-Platten, lackiertes Sperrholz usw. Die zu behandelten Unterlagen (Größe 15 x 15 cm = 225 cm²) werden in einer mit Filterpapierausgelegten Sprühbox, ein abgesaugter, nach vornehin offener Behälter, in einer Halterung in einem Winkel von 45°C eingelegt. Da jede Sprühdose von unterschiedlicher Zusammensetzung und technischer Ausrüstung in ihrem Sprühverhalten (Druck, Spritzkegel, Tröpfchengröße) abweichen kann, muß der Versuchsansteller, bevor die eigentlichen Unterlagen behandelt werden, mit jeder Sprühdose an Pappunterlagen (15 x 15 cm) trainieren, aus welcher Entfernung und in welcher Geschwindigkeit gesprüht werden muß.

Ein gleichmäßiges Besprühen der Unterlagen mit der gewünschten Aufwandmenge wird erreicht, wenn je nach Spritzkegel und Druck der Sprühdose aus einer Entfernung von 25-40 cm gesprüht wird. Dabei hat es sich als zweckmäßig erwiesen, die Dose von Hand in einem Halbkreis zu führen. Der Sprühstrahl wird dabei auf der Unterlage oben links beginnend über Mitte rechts nach unten links geführt (siehe Fig. 2).

Die Menge, die über die Ränder der Unterlagen hinaus gesprüht wird, der Spritzverlust, wurde in eingehenden Versuchen mit Pappumrandungen bestimmt und betrug ca. 10 %.

Vor und nach jedem Sprühvorgang wird die Sprühdose gewogen, um die ausgebrachte Menge Doseninhalt zu bestimmen.

Um eine z.B. Doseninhaltsmenge von 25 g/m² auszubringen, müssen 0,64 g Doseninhalt/225 cm² ausgebracht werden. Diese Menge enthält bereits die ermittelten 10 % Spritzverlust.

Unterlagen, auf die nicht die innerhalb der Toleranz von 0,59 bis 0,69 g liegende Menge Doseninhalt ausgebracht werden, müssen verworfen werden. Sofort nach dem Besprühen wird die Unterlage aus ihrer Schrägstellung genommen und flach gelegt, um ein Ablaufen des Sprühbelages, insbesondere bei nichtsaugenden Unterlagen und extrem feuchten Sprühdosen, zu vermeiden. Nach Abtrocknen der Spritzbeläge werden die Unterlagen in den Testraum überführt.

### 2. Tiermaterial und Testung

Die frisch behandelten aber noch feuchten Unterlagen werden mit den Testtieren (Schaben) besetzt.

Die Testtiere werden auf den Unterlagen in talkumierten Glasringen (Duchmesser 9,5 cm, Höhe 5,5 cm) gehalten. Bei Testtieren, die die Höhe des Glasringes überwinden können, werden entsprechend Ringe übereinandergesetzt. Je nach Größe werden 5 bis 10 Tiere pro Unterlage eingesetzt. Flöhe werden in nicht talkumierten Glasringen gehalten.

Bei den Schaben werden die Arten Blattella germanica und Blatta orientalis eingesetzt.

### 3. Auswertung

Die Auswertung erfolgt auf 20 und 100 % knock down nach Sekunden bzw. Minuten bis zu 2 Stunden. Danach wird prozentual ausgewertet.

**Tabelle 11**

| **Synergistische Verstärkung der Wirksamkeit von Sprühdosen, gemessen auf verschiedenen noch feuchten Oberflächen gegen Schaben der Art Blattella germanica L.5.** | | | | |
|---|---|---|---|---|
| Temperatur: 21 °C | | | Relative Feuchte: 48 % | |
| Sprühmenge: 25 g/m² | | | | |

| % Wirkstoff: | 20/100 % Knock-down nach Minuten (') und Sekunden (") | | | |
|---|---|---|---|---|
| Transfluthrin | Flufenoxuron | PVD | lasierte Kacheln | unlasierte Kacheln |
| - | 0,01 | 2 h 0 % | 2 h 0 % | 2 h 0 % |
| 0,05 | - | 35"/5'00" | 1'10"/3'40" | 50"/2'10" |
| 0,05 | 0,01 | 25"/3'50 | 10"/40" | 40"/2'00" |
| 0,05 | 0,005 | 35"/5'00" | 40"/1'50" | 1'00/1'50" |
| 0,05 | 0,0025 | 15"/1'10" | 25"/1'00" | 15"/1'40" |
| - | - | 2h 0% | 2 h 0 % | 2 h 0 % |

**Tabelle 12**

| **Synergistische Verstärkung der Wirksamkeit von Sprühdosen, gemessen auf verschiedenen noch feuchten Oberflächen gegen Schaben der Art Blatta orientalis L 5.** | | | | |
|---|---|---|---|---|
| Temperatur: 21°C | | Relative Feuchte: 48 % | | |
| Sprühmenge: 25 g/m² | | | | |

| % Wirkstoff: | | 20/100 % Knock-down nach Minuten (') und Sekunden (") | | |
|---|---|---|---|---|
| Transfluthrin | Flufenoxuron | PVC | lasierte Kacheln | unlasierte Kacheln |
| - | 0,01 | 2 h 0 % | 2 h 0 % | 2 h 0 % |
| 0,05 | - | 4'00/11'50 h | 3'50"/7'10" | 4'30"/10'30" |
| 0,05 | 0,01 | 2'40"/14'00" | 2'20"/3'30" | 3'30"/10'00" |
| 0,05 | 0,005 | 3'50"/1250" | 2'20"/6'20" | 4'50/11'20" |
| 0,05 | 0,0025 | 1'50"/10'10" | 2'00"/5'30" | 2'10''/5'10" |
| - | - | 2h 0% % | 2 h 0 % | 2 h 0 % |

Die Versuche ergaben, daß Flufenoxuron alleine wie zu erwarten war, gegen beide Schaben Arten, innerhalb der Prüfzeit von 2 Stunden, praktisch keine Wirkung zeigte.

Wurde Transfluthrin mit Flufenoxuron in wasserbasierenden Sprühdosen kombiniert, so ergab sich gegen Deutsche Schaben auf allen geprüften Oberflächen eine deutliche bis erhebliche bessere Wirkung der Kombinationen gegenüber der Transfluthrin-Monosprühdose (Tabelle 11).

Auch bei den Orientalischen Schaben wurden in den meisten Fällen durch die Kombinations-Sprühdosen eine deutlich bessere Wirkung erzielt, was besonders auf PVC und lasierte Kacheln zutraf (Tabelle 12).

Diese Wirkungsverbesserungen werden offensichtlich durch synergistische Effekte des Flufenoxurons hervorgerufen.

## Patentansprüche

1. Insektizide und akarizide Wirkstoffkombinationen, welche neben den üblichen Zuschlagsstoffen mindestens einen Wirkstoff aus der Reihe Transfluthrin, Allethrin und mindestens einen Insekten-Entwicklungshemmer aus der Reihe Fenoxycarb, Pyriproxyfen, Triflumuron, Flufenoxuron, Methoprene oder mindestens den pyrethroiden Wirkstoff Pyrethrum und mindestens einen Insekten-Entwicklungshemmer aus der Reihe Fenoxycarb, Flufenoxuron enthalten.

2. Insektizide und akarizide Wirkstoffkombinationen gemäß Anspruch 1, **dadurch gekennzeichnet, daß** sie Transfluthrin und als Insekten-Entwicklungshemmer Triflumuron und / oder Flufenoxuron. oder natürliches Pyrethrum und als Insekten-Entwicklungshemmer Flufenoxuron enthalten.

3. Insektizide und akarizide Wirkstoffkombinationen gemäß Anspruch 1, **dadurch gekennzeichnet, daß** sie 0,01 bis 2.0 Gewichtsprozent Transfluthrin und 0.005 bis 10.0 Gewichtsprozent Triflumuron und/oder Flufenoxuron enthalten.

4. Insektizide und akarizide Wirkstoffkombinationen gemäß Anspruch 1, die 0.01 bis 0.2 Gewichtsprozent Transfluthrin und 0.005 bis 1.5 Gewichtsprozent Triflumuron und/oder Flufenoxuron enthalten.

5. Wirkstoffkombinationen gemäß der Ansprüche 1 bis 4, **dadurch gekennzeichnet,daß** es sich um Sprayformulierungen handelt.

6. Wirkstoffkombinationen der Ansprüche 1 bis 4, **dadurch gekennzeichnet, daß** es sich um Formulierungen wie ULV-, Heiß- und Kabelnebel, Emulsionskonzentrate (EC), Emulsionskonzentrate auf Wasserbasis (EW) oder wettable Powders (WP) handelt.

7. Verwendung von Wirkstoffkombinationen gemäß der Ansprüche 1 bis 6 zur Bekämpfung von tierischen Schädlingen, die im Haushalt oder als Hygiene- oder Vorratsschädlinge vorkommen.

8. Verfahren zur Bekämpfung von tierischen Schädlingen, die im Haushalt oder als Hygiene- oder Vorratsschädlinge vorkommen, **dadurch gekennzeichnet, daß** man Wirkstoffkombinationen gemäß den Ansprüchen 1 bis 6 auf derartige Insekten bzw. Milben und/oder ihren Lebensraum einwirken läßt.

## Claims

1. Insecticidal and acaricidal active compound combinations, which besides the customary additives contain at least one active compound from the series consisting of transfluthrin, allethrin and at least one insect development inhibitor from the series consisting of fenoxycarb, pyriproxyfen, triflumuron, flufenoxuron and methoprene or at least the active compound pyrethrum and at least one insect development inhibitor from the series consisting of fenoxycarb and flufenoxuron.

2. Insecticidal and acaracidal active compound combinations according to Claim 1, **characterized in that** they contain transfluthrin and, as insect development inhibitors, triflumuron and/or flufenoxuron or natural pyrethrum and, as insect development inhibitor, flufenoxuron.

3. Insecticidal and acaricidal active compound combinations according to Claim 1, **characterized in that** they contain 0.01 to 2.0 per cent by weight of transfluthrin and 0.005 to 10.0 per cent by weight of triflumuron and/or flufenoxuron.

4. Insecticidal and acaricidal active compound combinations according to Claim 1, which contain 0.01 to 0.2 per cent by weight of transfluthrin and 0.005 to 1.5 per cent by weight of triflumuron and/or flufenoxuron.

5. Active compound combinations according to Claims 1 to 4, **characterized in that** they are spray formulations.

6. Active compound combinations of Claims 1 to 4, **characterized in that** they are formulations such as ULV, hot and cold mist, emulsion concentrates (EC), emulsion concentrates based on water (EW) or wettable powders (WP).

7. Use of active compound combinations according to Claims 1 to 6 for the control of animal pests which occur in the home or as hygiene or storage pests.

8. Method for the control of animal pests which occur in the home or as hygiene or storage pests, **characterized in that** active compound combinations according to Claims 1 to 6 are allowed to act on insects or mites of this type and/or their habitat.

## Revendications

1. Associations de substances actives insecticides et acaricides, qui contiennent à côté des additifs classiques au moins une substance active de la série transfluthrine, alléthrine, et au moins un inhibiteur du développement des insectes, de la série fénoxycarbe, pyriproxyfène, triflumuron, flufénoxuron, méthoprène ou au moins la substance active pyrèthre et au moins un inhibiteur du développement des insectes, de la série fénoxycarbe, flufénoxuron.

2. Associations de substances actives insecticides et acaricides suivant la revendication 1, **caractérisées en ce qu'**elles contiennent de la transfluthrine et, comme inhibiteurs du développement des insectes, du triflumuron et/ou du flufénoxuron ou du pyrèthre naturel et, comme inhibiteur du développement des insectes, du flufénoxuron.

3. Associations de substances actives insecticides et acaricides suivant la revendication 1, **caractérisées en ce qu'**elles contiennent 0,01 à 2,0 pour cent en poids de transfluthrine et 0,005 à 10,0 pour cent en poids de triflumuron et/ou de flufénoxuron.

4. Associations de substances actives insecticides et acaricides suivant la revendication 1, qui contiennent 0,01 à 0,2 pour cent en poids de transfluthrine et 0,005 à 1,5 pour cent en poids de triflumuron et/ou de flufénoxuron.

5. Associations de substances actives suivant les revendications 1 à 4, **caractérisées en ce qu'**elles consistent en formulations pulvérisables.

6. Associations de substances actives suivant les revendications 1 à 4, **caractérisées en ce qu'**elles consistent en formulations applicables par nébulisation à volume ultra-faible, à chaud et à froid, en concentrés émulsionnables (EC), concentrés émulsionnables à base d'eau (EW) ou poudres mouillables (WP).

7. Utilisation d'associations de substances actives suivant les revendications 1 à 6 pour combattre des parasites animaux que l'on rencontre dans les maisons ou comme parasites du secteur de l'hygiène ou des denrées entreposées.

8. Procédé pour combattre des parasites animaux que l'on rencontre dans les maisons ou comme parasites du secteur de l'hygiène ou des denrées entreposées, **caractérisé en ce qu'**on fait agir des associations de substances actives suivant les revendications 1 à 6 sur de tels insectes ou acariens et/ou sur leur milieu.
